# EUROPEAN PATENT APPLICATION

(11) **EP 1 008 940 A2**
(43) Date of publication of application: **14.06.2000**
(21) Application number: 99309343.4
(22) Date of filing: 23.11.1999
(51) Int. Cl.: G06F 12/08

(54) **Intelligent and adaptive memory and methods and devices for managing distributed memory systems with hardware-enforced coherency**

(30) Priority: 07.12.1998 US 206315
(71) Applicant: Network Virtual Systems Inc., San Jose, CA 95110-1016 (US)
(72) Inventor: Akkawi, Isam, Aptos, CA 95003 (US); Donley, Greggory D., Sunnyvale, CA 94086 (US); Quinn, Robert F., Campbell, CA 95008 (US)
(74) Representative: Spoor, Brian

(57) **Abstract**

Methods and devices for reducing memory access latencies in scaleable multi-node, multi-processor systems include supplementing the demand driven nature of filling cache memories wherein caches are filled based upon the past demands of the processor or processors coupled thereto with a push-based model wherein recently modified lines of memory are actively pushed into selected cache memories based upon usage information. The usage information is maintained for each line of memory and indicates at least which node in the system stores a copy of which line of memory. The timing of the pushing is adaptive and configurable and biases the system to push updated copies of recently modified lines of memory to selected nodes before the processors associated therewith request the line. Other methods and devices for reducing memory access latencies in a multi-node multi-processor system carry out the steps of generating two-phase acknowledgments to invalidate commands wherein, after a phase I acknowledgment, a requesting processor is allowed to modify a line of memory before other processors in the system receive the invalidate. A temporary and process-transparent incoherency then occurs for that line, which is resolved by delaying all access requests to the modified line until phase II acknowledgements to the invalidate are received from all nodes sharing that line. The push-based method of filling the cache memories may be employed together with the two phase invalidate acknowledgment method, or may be employed separately therefrom.

## Description

### BACKGROUND OF THE INVENTION

### 1. Field of the Invention

This invention relates to the field of memory management for distributed and shared memory systems. More particularly, the present invention relates to methods and devices to efficiently manage distributed and shred memory systems with reduced memory access latencies.

### 2. Description of the Related Art

The demand for increasingly powerful servers is growing and is projected to continue to grow in the foreseeable future. This demand is fueled by the emergence of increasingly large databases, the explosive growth of both private and public computer networks and the proliferation of computationally demanding applications, to name a few factors. The performance of such servers may be increased by, for example, increasing the raw performance of the processor and/or coupling a plurality of such processors together. However, the processing speeds of modern processors has outpaced the ability of memory to provide requested data in a timely manner. Memory caching techniques have been developed to attempt to mitigate the effects of this speed disparity and the performance of individual processors has become increasingly dependent upon the behavior of their caches.

Cache memories may be characterized, for example, by their location relative to the processor to which they supply data. For example, caches located closest to the processor may be termed "L1" caches, whereas caches further away from the processor may be termed "L2" caches. Still other cache memories may reside on the memory bus or on some other proprietary bus, and may be shared by multiple processors. Where L1 and L2 caches are already present, such other caches may be called "L3" caches. Cache memories, in general, are configured to store data the processor is currently accessing based on the observation that this is data the processor is likely to request in the future. The larger the cache, the more likely that the requested data will be found in the cache and that the next data request will be satisfied by accessing the cache rather than external memory. Memory access latency may be defined as the time interval between a processor request for data and the time at which the processor is supplied with the requested data. Latency is typically minimized, for example, when the requested data can be supplied from the L1 cache. The latencies become progressively longer when the requested data must be fetched from the L2 cache, the L3 cache or from external memory.

Scaleable multi-processing and scaleable multi-computers are utilized in situations wherein very high processing power is required, wherein the assigned tasks may be usefully distributed among many processors, and wherein shared memory effectively functions as a communication mechanism between processes and threads executing on the processors. The performance of such multi-processor systems depends in part upon how effectively the constituent processors of the system can utilize their caches. For example, processes running on different processors of a multi-processor system typically communicate using shared memory. However, the use of shared memory for inter-process and inter-processor communications entails that most references to that shared memory are cache misses (a cache miss being generally defined as an instance where a requested data cannot be supplied from cache memory). Indeed, when a processor requests to modify a piece of memory to communicate with another processor, the requesting processor typically takes that piece of memory into its cache. To insure that other processors do not access stale data (i.e., not the most recently modified instance of that data), the data to be modified is made unavailable to other caches serving the other processors in the system. Conventionally, therefore, a significant percentage of shared memory-based communications and communications based on shared data structures are cache misses.

Conventionally, cache memories are filled with data from external memory based upon the demands of the processor associated with the cache. In this conventional caching scheme, the cache is filled when a processor requests a line of memory that is currently not in the cache. This mechanism may be enhanced by features such as read-ahead, where the cache controller device fetches the next line of memory in anticipation that the processor will request it after executing or operating on the current line. This scheme takes advantage of the fact that most code is at least piecewise linear and that jumps to other segments of memory occur rather infrequently, and that operations are carried out on contiguous chunks of memory. The solely demand-driven nature of conventional cache filling schemes, although effective in significantly shortening latencies in uniprocessor systems, becomes less so in multi-processor environments, and particularly so when shared memory is heavily used as a method of communicating between processors. The latency to access and modify lines of memory that are resident in the caches of other processors generally increases as the number of processors increases, thereby severely limiting the performance gain potential of adding additional processors to the system. A similar situation exists in a multi-computer system that uses shared memory for communication, and uses caching of that shared memory to minimize the access latency to memory

What are needed, therefore, are methods and devices to more effectively manage shared memory in a scaleable multi-processor and scaleable multi-computer environment. More particularly, methods and devices are needed to more efficiently manage cache memories in a multi-processor and/or multi-computer system that reduce latencies in accessing and modifying lines of memory.

Conventionally, when a processor wishes to modify a line of memory that is present in its cache in the shared state (i.e., a state indicating that copies of that line are present in caches in other nodes), an invalidate cycle is initiated by that processor (or by the cache controller associated with that processor). An invalidate cycle conventionally forces all other processors in each node of the system to invalidate any copies of the memory line that may be stored in their associated cache memories. Conventionally, when the initiating processor receives acknowledgment from the other processors that they have received the invalidate and that all copies of that line of memory have been invalidated, the initiating processor alone has the exclusive valid copy of that line and is now free to modify the contents of (write to) that memory line. This is a long latency operation, particularly in a distributed memory system, as the memory controller associated with the initiating processor must conventionally wait for receipt, processing and acknowledgment of the invalidate from each of the sharing nodes. It is only upon receipt of the invalidate acknowledge from each of the sharing nodes that the initiating processor may modify the line in question and resume performing useful work. This sequence of events maintains system-wide coherency of lines of memory but increases the memory access latency as the number of nodes increases, and is a lengthy operation even for a few nodes.

What are also needed, therefore, are methods and devices to more efficiently and rapidly modify lines of memory that are shared among a plurality of nodes in a multi-processor and/or multi-computer system. More particularly, what are also needed are methods and devices to efficiently process invalidates and to thereby reduce the latency for requests to modify lines of memory resident on other nodes in a multi-processing and/or multi-computer system.

### SUMMARY OF THE INVENTION

An object of the present invention, therefore, is to provide methods and devices to more effectively manage shared memory in a scaleable multi-processor and scaleable multi-computer environment. More particularly, an object of the present invention is to provide methods and devices to more efficiently manage cache memories in a multi-processor and/or multi-computer system that reduce latencies in accessing and modifying lines of memory. Another object is to provide methods and devices to more efficiently and rapidly modify lines of memory that are shared among a plurality of nodes in a multi-processor and/or multi-computer system. More particularly, it is an object of the present invention to provide methods and devices to efficiently process invalidates and to reduce the latency for requests to modify lines of memory resident on other nodes in a multi-processing and/or multi-computer system.

In accordance with the above-described objects and those that will be mentioned and will become apparent below, a method of reducing memory access latencies in a multi-processor system, each processor having at least one cache associated therewith, according to an embodiment of the present invention, comprises the steps of:
maintaining usage information on a plurality of lines of memory in the system, the usage information at least indicating which caches stores a copy of which of the plurality of lines of memory;
pushing a selected line of memory into at least one selected cache based upon the usage information.

According to other embodiments, each of the plurality of lines of memory may store its own usage information. The maintaining step may include the step of storing the usage information in a portion of each line of memory assigned to an error correction code. The selected line of memory may include a recently modified line of memory. The plurality of lines of memory may include every line of memory in the system. The plurality of lines of memory may include lines in a shared state. The selected line of memory may be pushed into the selected cache or caches prior to a request therefor by a processor or processors associated with the selected cache or caches. A temporary incoherency may be allowed between a recently modified and locally cached line of memory and an unmodified copy thereof stored in the cache or caches of other processors, the temporary incoherency lasting at least until the cache or caches invalidate the unmodified copy of the line of memory, and access to the modified line of memory (or indeed to any other lines that have been subsequently modified) may be disallowed until the cache or caches acknowledge invalidating the unmodified copy or copies of the line of memory. The selected line of memory may include the modified line of memory and the pushing step may push the modified line of memory into the cache or caches, the cache or caches being identified by the usage information. According to another embodiment, the pushing step may be carried out after an adaptive and configurable delay. The delay may be reduced, for example, when a request for the selected line of memory is received from another processor prior to the pushing step, and may be increased, for example, when another request for the selected line of memory is received from the same processor or (node).

The method may further comprise the steps of generating an invalidate each time a processor requests to modify a line of memory in a shared state allowing the requesting processor to modify the line on receipt of a phase I acknowledgment to the invalidate, thereby allowing a temporary incoherency between the modified line and other unmodified copies thereof; disallowing access by other processors within the multi-processor system to the line to be modified (or indeed to any other lines that have been subsequently modified), and allowing access to the modified line only after the phase II acknowledgment of the invalidate is received which indicates that each processor previously containing an unmodified copy has invalidated that copy thereof.

In another aspect of the present invention, a method of reducing memory access latencies in a multi-processor system comprises the steps of:
allowing a first processor within the system to modify a line of memory without first informing other processors sharing the line, thereby creating a temporary incoherency between the modified copy of the line and other unmodified copies thereof in the system; and
disallowing accesses to the modified line (and subsequently modified lines) until all other processors sharing the line acknowledge invalidating their unmodified copies thereof.

According to further embodiments, a phase I acknowledgment of the invalidate may be issued to the requesting processor (node) when it is determined that no other processor is currently modifying this line, allowing the requesting processor to modify the line immediately on receipt of the phase I acknowledgment of the invalidate, disallowing access by other processors to the modified line and to any other lines modified after this modification, receiving a phase II acknowledgment of the invalidate when all other sharing processors have invalidated their unmodified copies of the line, and after receipt of this phase II acknowledgment allowing access by other processors to the modified line. The method may further comprise the steps of accepting requests from the other processors within the system for access to the modified line of memory (and other subsequently modified lines) immediately after the first processor modifies the line; fetching the modified line of memory; and enabling access to the fetched modified line(s) only after all other processors sharing the line acknowledge invalidating their unmodified copies thereof. The multi-processor system may include a plurality of nodes, each node including at least one cache memory configured to store a plurality of lines of memory, and the method may further comprise the steps of maintaining usage information on each line of memory stored in each of the home memory nodes, the usage information at least indicating which nodes store a copy of which line of memory; and pushing the modified copy of the line to each of the plurality of nodes which prior to the invalidate had stored shred unmodified copies of the line, based upon the usage information. Each of the plurality of nodes may include a memory controller controlling the home memory and the pushing step may be carried out by a first memory controller pushing the modified line to one or more cache controllers. Each node may have a combined cache and memory controller. Each cache memory may include the functionality of the memory controller and the pushing step may be carried out by a first cache memory pushing the modified line directly to one or more second cache memories.

According to a further embodiment, a method of reducing memory access latencies in a multi-processor system wherein constituent processors communicate through a shared memory space, each processor being coupled to a cache memory, according to the present invention, comprises the steps of:
filling the each cache memory with lines of memory based upon both requests from at least one processor to which the cache memory is coupled and from pushes of recently modified lines of memory from the respective other caches.

A step of pushing recently modified lines of memory from each cache to the memory controller coupled thereto may also be carried out. The caches may be connected by a shared bus, each cache memory thereby pushing recently modified lines of memory directly into selected other cache memories within the system. A step of maintaining usage information on each line of cached memory may be carried out and the cache uses this information to determine when (or if) to push the recently modified line out on to the shared bus, at which time the cache will transition this line from the modified state to the shared state. When other caches see (snoop) the push (write) operation on the shared bus, and subsequently determine that they have a free cache entry which recently had a shared copy of that line, the cache (controller) will put the new data into this entry and mark it as shared.

The present invention may also be viewed as a multi-node shared memory computer system, each node of the system being coupled to a fabric, comprising:
at least one processor,
memory, the memory including at least a global memory segment and a global memory cache, the global memory segment representing a fractional portion of a total shared memory space of the system, the global memory cache storing lines of memory copied from the global memory segment of other nodes in the system, and
a memory controller, the memory controller controlling the global memory segment and the global memory cache and being configured to push lines of memory recently modified by said at least one processor to a memory controller of another node within the system and to receive lines of memory pushed thereto.

The memory controller may be configured to interface with the fabric. The memory may include dynamic random access memory (DRAM). The memory controller may be adapted to maintain usage information on each line of memory in the memory. The memory controller may be adapted to participate in the two-phase acknowledgment of invalidates strategy by providing one or both phases of the acknowledgment to the memory controllers of other nodes in the system, the memory controller allowing the processor to modify a requested line of memory after receipt of a phase I acknowledgment of the invalidate; and to actively push a modified line of memory to the other nodes in the system after receipt of the update. The memory controller may be configured to push the recently modified lines of memory to other nodes within the system after an adaptive and configurable delay.

In another embodiment, the present invention may also be viewed as a memory controller for a node within a multi-node computer system, each node comprising at least one processor, shared memory and cache memory, comprising:
means for interfacing to a fabric coupling each node of the system;
means for controlling and for maintaining usage information on each line of memory in the shared memory and the cache memory;
means for pushing recently modified lines of memory to other memory controllers coupled to the fabric based upon the usage information; and
means for receiving copies of recently modified lines of memory from the other memory controllers through the fabric and for storing the received modified lines in one of the shared memory and the cache memory.

According to further embodiments, means for generating a two-phase acknowledgment of an invalidate may also be included, the memory controller allowing the processor to modify a line of memory after a phase I acknowledgment of the invalidate and blocking all other accesses to the modified line until a phase II acknowledgement of the invalidate is received from other memory controllers in the system sharing a copy of the line. Means may be included for adaptively timing pushes of the recently modified lines of memory to increase a probability that the recently modified pushed lines of memory will be received by other nodes before they are requested thereby. The usage information may include information as to which nodes in the system store copies of which lines of memory and the memory controller may further comprise means for storing the usage information in a portion of each line of memory assigned to an error correction code. The usage information may include statistical memory line usage information

### BRIEF DESCRIPTION OF THE DRAWINGS

For a further understanding of the objects and advantages of the present invention, reference should be made to the following detailed description, taken in conjunction with the accompanying figures, in which:
Fig. 1 is a block diagram of a multi-node, multi-processor computer system according to the present invention.
Fig. 2 shows an embodiment of logical partitions of the DRAM coupled to each of the memory controllers shown in Fig. 1.
Fig. 3 shows an example of the structure of a line of memory.
Fig. 4 shows one embodiment of a data structure to store the usage and/or statistical information according to an embodiment of the present invention.
Fig. 5 is a flow chart of a method for reducing memory access latencies in a multi-processor environment according to an embodiment of the present invention.
Fig. 6 is a flowchart of another method for reducing memory access latencies in a multi-processor environment, according to another embodiment of the present invention.

### DESCRIPTION OF THE PREFERRED EMBODIMENTS

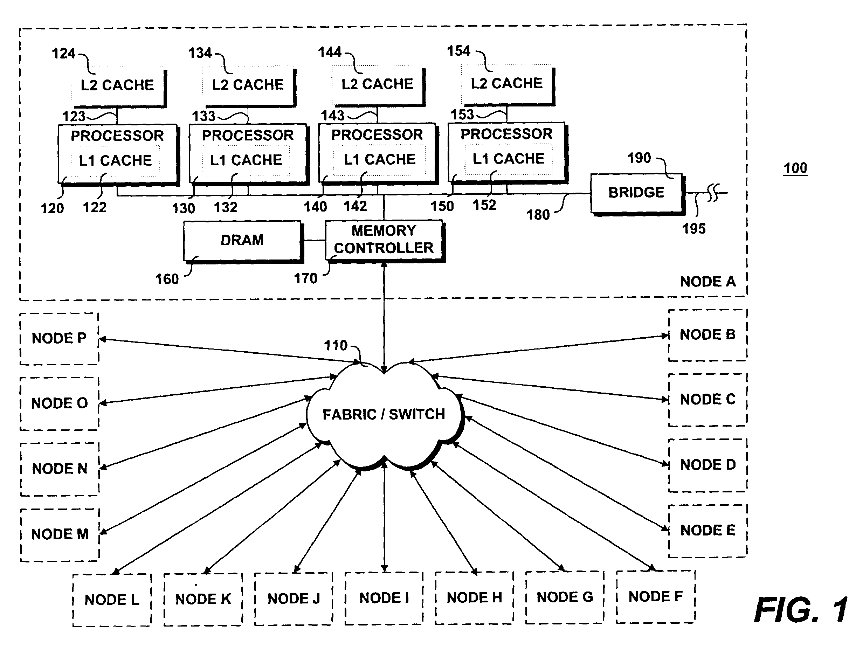

Fig. 1 is a block diagram of a scaleable multi-node, multi-processor and/or multi-computer system according to an embodiment of the present invention. As shown therein, a multi-node, multi-processor computer system 100 includes a plurality of nodes (16 nodes are shown in Fig. 1, although the present invention is readily scaleable to any number of nodes) A through P coupled to a fabric/high speed switch 110. The fabric/high speed switch 110 transports data packets between the nodes A through P and may also perform additional functions to enhance performance of the system 100, such as providing the rapid phase I acknowledgment of the invalidate, as will be described in detail below. Each of the nodes A through P may include one or more processors 120, 130, 140 and/or 150, memory 160 and a memory controller 170 coupled to one another by a bus 180. For ease of illustration and reference, however, only the structure of node A is shown in Fig. 1, it being understood that nodes B through P may include identical or similar structures.

Reference numeral 180 designates the processor/memory bus. A plurality of processors may be attached to the processor/memory bus 105, such as processors 120, 130, 140 and 150. An L1 cache memory 122, 132, 142 and 152 may be integrated within each of the processors 120, 130, 140 and 150, respectively. Each of the processors 120, 130, 140 and 150 may also have an L2 cache memory coupled thereto, such as shown at reference numbers 124, 134, 144 and 154, respectively. The L2 caches may reside, for example, on the processor, on a processor/memory bus or on a proprietary backside bus, such as shown at 123, 133, 143 and 153. The L1 caches 122, 132, 142 and 152, as well as the L2 caches 124, 134, 144 and 154, shown in dashed lines in Fig. 1, may be omitted or may be structured differently than shown in Fig. 1.

Referring now specifically to node A (for ease of description only), a memory controller 170 is also connected to the processor/memory bus 105. The memory controller 170 controls the memory coupled to node A and controls the memory input/output (I/O) functions to and from the fabric/switch 110 and node A. The memory controller 170 responds to all transaction from local processors such as processors 120, 130, 140 and 150 and to all transactions received from other nodes via the fabric/high speed switch 110. Toward that end, the memory controller 170, according to the present invention, includes an interface to the processor/memory bus 180, to allow the processors 120, 130, 140 and/or 150 to communicate with memory and with other processors resident in nodes B through P. A bridge 190 may interconnect the processor/memory and system I/O buses 105, 195. The system I/O bus 195 may be implemented as a PCI bus, for example, or some other bus architecture. A number of devices (not shown) may be connected to the system I/O bus 195, such as displays, one or more mass storage devices and/or other devices. Alternatively, these I/O devices and I/O busses may be connected through the fabric/high speed switch 110.

According to the present invention, the processors 120, 130, 140 and 150, as well as their counterparts in nodes B through P communicate via shared memory, although other forms, such as message based communication, may be concurrently operative. According to an embodiment of the present invention, the shared memory collectively available to the nodes A through P may be quite large and may be logically divided between each of the nodes A through P. For example, the total amount of shared memory within the multi-node multi-processor system 100 may be about 64 Gbytes. In this illustrative example, each memory controller 170 may be mapped to and control about one sixteenth (1/16) of that 64 Gbyte memory space, or about 4Gbytes. There is no requirement, according to the present invention, of an equal division of shared memory among the nodes A through P of the system 100. The memory controller 170 may control, according to an embodiment of the present invention, memory including the Dynamic Random Access Memory (hereafter "DRAM") 160, although other memory types may be utilized. The DRAM 160 in each of the nodes A through P may, therefore, include a fractional portion of the total physical shared memory space on the system 100, such as, for example, about 4Gbytes in a 64 Gbyte shared memory system.

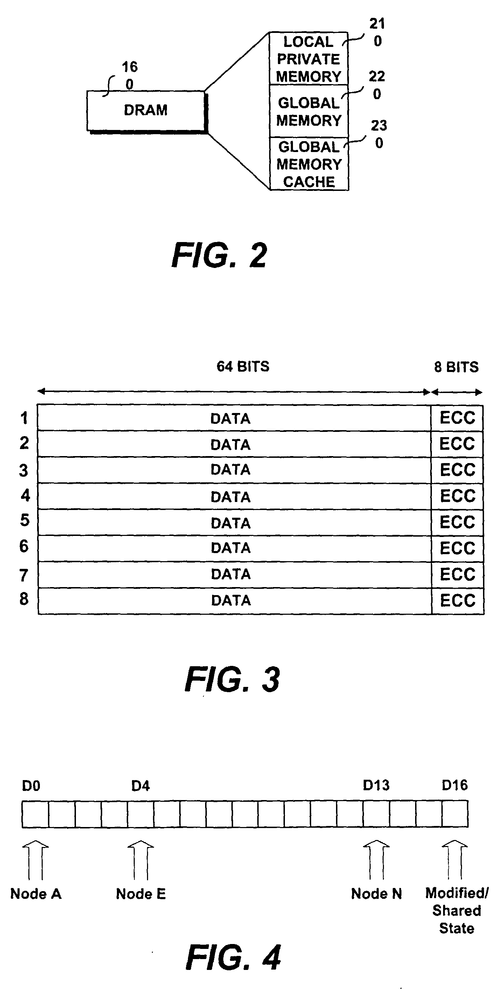

The DRAM 160, according to the present invention may be logically partitioned into a plurality of segments. Fig. 2 shows one possible partitioning of the DRAM 160 of Fig. 1. As shown therein, the DRAM 160 of the present invention may be logically partitioned into three segments; namely local private memory 210, global memory 220 and global memory cache 230. Local private memory 210 includes memory that is only accessible to processors on that node. For example, the DRAM 160 of node A in Fig. 1 may include local private memory 210 that is accessible only to processors 120, 130, 140 and/or 150 resident in node A. The memory controller 170 responds to read and write requests generated by processors within the node for access to the local private memory 210. Global access requests from other nodes through the fabric 110 to the local private memory 210 will, according to the present invention, be denied, while request from I/O devices may be allowed. The global memory 220 of the DRAM 160 is that portion of the total shared memory for which the node is responsible. For example, node A (Fig. 1) may be responsible for its own fractional portion of the total shared memory. In the illustrative case wherein the total shared memory space of the system 100 is about 64 Gbytes, the global memory 220 may be about 4 Gbytes. The global memory 220 within the DRAM 160 may be accessed by processors of any of the nodes A through P (with correct permissions) in the system 100. The global memory 220 may be configured such that other nodes (for example, nodes B through P) in the system I00 may cache lines of memory stored within this global memory 220 and rely on their associated memory controller 170, in combination with the home memory controller (e.g., the memory controller 170 of Node A is the home memory controller for the global memory 220 associated with Node A) 170, to ensure that any and all such cached copies remain logically consistent with the instructions streams running on any processor within the system 100, in the manner detailed below. Lastly, the global cache memory 230 of the DRAM 160 maintains, according to the present invention, cached copies of global memory that is managed by other nodes (for example, nodes B through P) within the system 100. The global cache 230 may be organized in various ways, such as direct-mapped, 4-way set associative or 8-way set associative. The present invention, for illustrative purposes only, will be hereafter described using a direct mapped organization for the global cache 230. The global memory cache 230 improves the performance of the system 100 by providing faster access to remote memory (i.e., memory that is stored in the global memory 220 of another node, for example) by locally caching lines of memory and by allowing many nodes in the system 100 to access and read the same line of memory simultaneously, as many copies of the same line of memory may be cached in the global memory cache 230 of the DRAM 160 of the nodes A through P.

One example of a possible structure of a line of memory is illustrated in Fig. 3. As shown therein, a line of memory may be 72 bits wide, including 64 bits of data and 8 bits of error correction code (hereafter "ECC"). The line of memory shown in Fig. 3 includes 8 such data words, called beats, each beat being 72 bits in length. The line of memory shown in Fig. 3 is, therefore, well adapted to 72-bit semiconductor memory packages, such as 72 bit DIMMs or SIMMs. It is to be understood, however, that Fig. 3 is but one possible structure for a line of memory, and the present invention is in no way to be limited thereto. It is also to be understood that the structure of lines of memory will change as bus widths increase to 128, 256 bits and beyond, or decrease to 20, 18, 16, 10, 9, or 8 bits, and the present invention is readily scalable to most any bus width and/or to differing bus architectures. The ECC portion of the memory line shown in Fig. 3 is illustrated as being located after the least significant bit of each of the 64 bit data words for ease of illustration only. Conventionally, the 8 bit ECC words are interleaved within the 64 bit data words of each beat. The ECC protects its corresponding beat by allowing correction of corrupted data due to, for example, soft errors, stray alpha particles and the like.

Conventional cache memories are demand driven, meaning that the contents of the cache are determined exclusively by the past history of the processor or processors to which the cache is coupled. Indeed, at any given time, a conventional cache memory is likely to contain lines that have recently been used by the processor and lines that are adjacent thereto, using read-ahead techniques and the like. In such conventional schemes, the processor is the driving force, causing the cache memory to fill or to flush itself based upon the current execution stream. Although highly effective in uniprocessor systems, the effectiveness of such conventional cache filling techniques suffers as the number of nodes in a multi-node, multi-processor system increases.

The present invention, in one embodiment thereof, supplements this demand driven nature of conventional cache memories by actively, intelligently and adaptively pushing lines of memory into the respective cache memories of selected nodes in a multi-processor system, preferably before such lines of memory are requested by the processors to which the caches are coupled. In so doing, memory access latencies are reduced, as a processor in a multi-node system requesting lines of memory need not go through the long latency cycle of requesting access to cached lines of memory resident on another node and copying such lines into its own cache memory before making use of such lines.

To do this, it is necessary to push the correct data into the cache memories of the system 100, as pushing the wrong data (e.g., lines of memory that likely will not be requested by the processor) will decrease system performance by decreasing the cache hit ratio) the ratio with which the processor finds the next requested line of memory in its cache. According to an embodiment of the present invention, to increase the probability of pushing the correct data (e.g., lines of memory that likely will be requested by the processor), the memory controller 170 of each of the nodes A through P maintains usage information on each of the lines of global memory 220 of its respective node.

This usage information may, according to the present invention, take many forms. For example, the usage information may include a list of which nodes share a copy of which lines of memory in the system 100. Based upon such usage information, when one processor 120, 130, 140 and/or 150 in one node A through P modifies a given line of memory that is also stored in other nodes, the modified line of memory may be preemptively distributed to all other nodes A through P in the system 100 that previously stored an unmodified copy thereof. This preemptive distribution of recently modified lines of memory preferably occurs, according to the present invention, before such modified lines of memory are requested by the processors coupled to the caches (for example, the global memory caches 230) to which the modified lines of memory have been distributed. Thus, each node and each cache memory within each node that previously stored an unmodified copy of the recently modified line of memory automatically receives an updated copy thereof, unsolicited by its associated processor or processors. In this manner, each node caching a line of memory in the shared state receives an updated copy of the line before that line is requested by processor or processors of that node. According to the present invention, if the contents of a cache has changed and the space therein previously occupied by the unmodified copy of the line of memory is no longer available, the receiving cache memory need not accept the modified copy of the line of memory. Therefore, wrong data is never pushed into any of the global memory caches 230 of the system 100, and access latencies to this memory are reduced.

In one embodiment, the memory controller 170 of node A and the corresponding memory controllers 170 of nodes B through P manage the cache memories of all processors within their respective nodes. For example, with reference to Fig. 2, the memory controllers 170 control the DRAM 160, including the local private memory 210, the global memory 220 and the global memory cache 230. The memory controller 170, according to an embodiment of the present invention, manages, updates and maintains the usage information that enables the intelligent and adaptive pushing of recently modified lines of memory to the appropriate nodes A through P. Indeed, each memory controller 170 may maintain lists of each node A through P that currently maintains a shared copy (in their respective global memory caches 230) of each line of memory in its global memory 220. Therefore, when one of the processors 120, 130, 140 or 150 modifies a line of memory in the global memory segment 220 of the DRAM 160, for example, the memory controller 170 will know, according to an embodiment of the present invention, to which node or nodes it must push a copy of the recently modified line of memory.

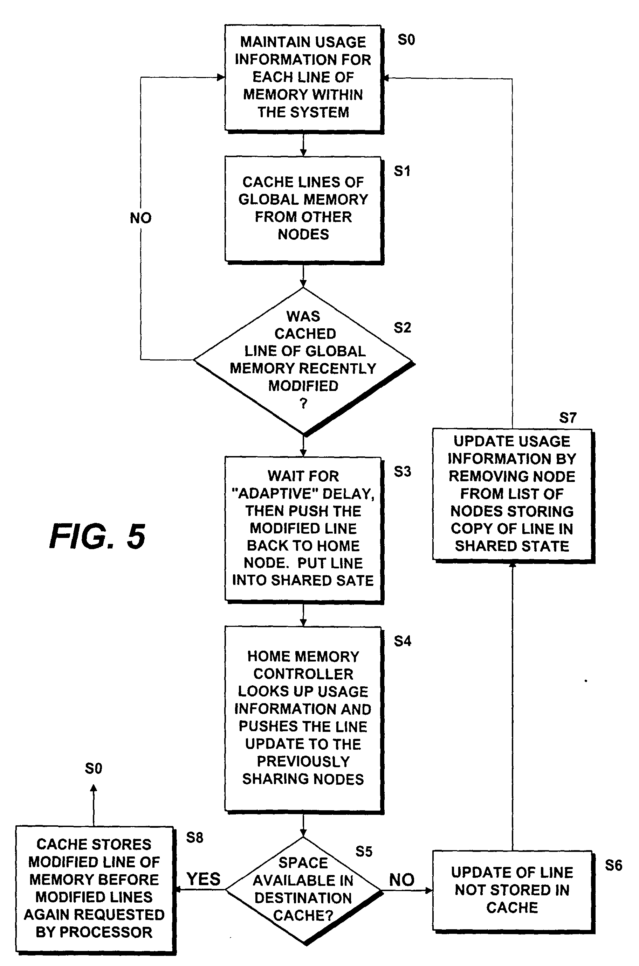

Fig. 5 is a flowchart illustrating an embodiment of the present invention. As shown therein, step S0 calls for the maintenance of usage information for each line of memory within the system 100, each memory controller 170 maintaining usage information on lines of global memory stored within its node. In step S1, the global memory cache 230 caches lines of global memory from other nodes. In step S2 it is determined whether a cached line of global memory was recently modified. If not, the method returns to step S0. If, however, a line of memory was recently modified, the memory controller 170 waits for an adaptive delay after which the modified line of memory is pushed, according to step S3 back to the home node (the node containing the global memory 220 storing the line) via the memory controller for that node, and the line is transitioned to the shared state. In step S4 the home memory controller determines which nodes had previously stored a shared copy of this line based upon the usage information, and pushes the modified line to these nodes.. In step S5, it is determined whether space is available for the pushed line or lines of memory in the destination cache. If not, the modified line of memory is not pushed into the destination cache, as shown in step S6, and the usage information for that line of memory is updated by removing the node containing the destination cache from the list of nodes storing a copy of the line of memory in the shared state, as set forth in step S7. From step S7, the method according to this embodiment of the present invention returns to step S0. If, however, space is available in the destination cache for the copy of the recently modified line of memory, then the destination cache stores the modified line of memory therein. According to the present invention, this preferably occurs before the (modified) copy of the line is requested by a processor, as shown in step S8. The method thereafter returns to step S0 and may repeat.

The usage information may be stored, for example, in a the local private memory 210, as that memory space is accessible only to the node to which it belongs. The usage information may also be stored in a memory entirely separate from the DRAM 160. Alternatively still, each line of memory within the global memory 220 and/or the global memory cache 230 may store its own usage information.

Fig. 4 illustrates a suitable data structure for storing the usage information according to the present invention. As shown therein, two 8-bit bytes may be sufficient to store the usage information for a single line of memory. Indeed, using only 17 bits (for a 16 node system 100), each line of memory within the global memory 220 of a node A through P may be provided with the necessary information to intelligently and adaptively push recently modified lines of memory to selected respective memory controllers 170 in the system 100. The data structure of Fig. 4 includes 17 bits, identified as bits D0 through D16. According to an embodiment of the present invention, setting any of the bits D0 through D15 to a logical "1", for example, may indicate to the memory controller 170 that a corresponding node A through P stores a copy of the line of memory in the shared state. For example, should the data word of Fig. 4 store a logical "1" in bit positions D0, D4 and D13, the memory controller 170 would "know" that nodes A, E and N of Fig. 1 each store a copy of the line of memory in question. The usage information stored in the data word of Fig. 4 may then allow the memory controller 170 to push a copy of the modified line of memory to nodes A, E and N shortly after the line is modified and preferably before the processors of nodes A, E and N request access thereto. Bit D16 may be set, for example, to a logical "1" when the line of memory associated with the data structure of Fig. 4 is in an modified state, meaning that only one node has a valid copy thereof. Bit D16 may also be reset to a logical "0" when the line of memory is in the shared state.

According to one embodiment of the present invention, to modify a line of memory and to push modified copies thereof to the appropriate nodes A through P, one of the processors 120, 130, 140 or 150 places a request to the memory controller 170 to modify a line of memory within its global memory cache 220. The memory controller 170 then generates an invalidate over the system 100, directing all nodes currently storing a copy of the line to be modified to discard (e.g., invalidate) their copy thereof. This maintains coherency of that particular line of memory throughout the system 100, insuring that only one valid version of the same line of memory is present within the system 100. Other embodiments of the present invention allow a temporary but user and application-transparent incoherency to occur, as will be discussed below in detail. According to the present embodiment, once an invalidate acknowledgment is received from all nodes in the system 100, or from all nodes storing a copy of the line of memory, bit D16 may be set to "1" , indicating that the copy of the line to which the data word of Fig. 4 is associated is in the modified state and that only one node has a valid copy of the line throughout the system 100. The processor 120, 130, 140 or 150 may then freely modify the line. Thereafter, the memory controller 170 may consult the usage information illustrated in Fig. 4 to determine the node or nodes to which the modified copy of the line of memory must be distributed. If, for example, bits D0, D4 and D13 are set, the recently modified copy of the line of memory will be pushed to nodes A, E and N. If, for example, the corresponding space within the global memory caches 230 of the DRAM 160 of node E is not longer available, the memory controller 170 of node E will not accept the push, and the modified copy of the line of memory will not be stored in the DRAM 160 of node E, thereby insuring that no wrong data is pushed therein. After the push, bit D16 may be reset to a logical "0", indicating that the line of memory is now in the shared state.

According to one embodiment of the present invention, the usage information embodied in the data structure of Fig. 4 may be stored within the line of memory itself. Referring now back to Fig. 4, each of the 8 beats of a line of memory includes 8 ECC bits. Therefore, 64 ECC bits are included (and possibly interleaved) within each line of memory. Therefore, the error correction is conventionally carried out on a beat level, after every 64 bits of data. According to the present invention, however, the data structure embodying the usage information may be stored in the space assigned to the ECC error correction code or in a portion thereof. Indeed, if 8 bits of ECC are sufficient to correct 64 bits of data (1 beat), then 9 bits are sufficient to correct 128 bits of data (2 beats), 10 bits are sufficient to correct 256 bits of data (4 beats) and 11 bits are sufficient to correct 512 bits (64 x 8) of data or 8 beats. Therefore, 11 bits (using, for example, two 8-byte words) of ECC may be sufficient to correct an entire line of memory. Using two bytes for the ECC out of the 8 bytes of memory space assigned to the ECC in a line of memory, therefore, leaves ample free room (a memory space equivalent to 6 bytes) within each memory line to store the two byte data structure of Fig. 4, or a larger structure storing even more detailed usage information or statistics. When the data structure of Fig. 4 is stored within a line of memory as shown in Fig. 3, the error correction no longer occurs on an individual beat level, but is carried out (at least for some of the beats of a line) after several of the 64 bit data portions have been processed. However, as soft errors and the like are very infrequent, this is not believed to significantly affect performance. Therefore, by freeing up some of the memory space within each line of memory normally assigned to the ECC, each line of memory has enough free memory space to store the usage information necessary to allow the memory controller 170 to intelligently and adaptively push modified lines of memory to selected nodes within the system 100. In fact, using an 11 bit ECC for each line of memory frees up much more space than actually required to store the data structure of Fig. 4. Therefore, the usage information need no be limited to an identification of nodes currently sharing a copy of the line of memory in question. Other data, such as statistical usage information, may be stored in the freed-up space within each line of memory, the present invention not being limited to the data structure illustrated in Fig. 4, nor by the manner of storing such usage information. It is possible to envisage other variations in the configuration and storage of the usage information according to the present invention, and all such variations should be deemed to fall within the scope of the present invention.

As foreshadowed above, another embodiment of the present invention allows a temporary incoherency in the lines of memory across the system 100, in order to further improve memory access latencies. This temporary incoherency, however, is wholly transparent to the user(s) and to the applications streams running on the processors 120, 130, 140 and/or 150 on all nodes A through P in the system 100. According to this embodiment, an invalidate transaction is broken into two distinct phases. According to the present invention, after a processor 120, 130, 140 or 150 requests to modify a line of memory in the shared state, the memory controller 170 issues an invalidate. The memory controller receives a phase I acknowledgment of the invalidate from, for example, the fabric/high speed switch 110, which indicates that this invalidate transaction is guaranteed to be the only invalidate transaction in process for that specific memory line. This operation can be completed far faster than a conventional invalidation transaction in a distributed memory system. The requesting processor 120, 130, 140 or 150 receives a completion to its modification request from the memory controller and resumes performing useful work, without the delays conventionally associated with waiting for each node A through P to return an invalidate acknowledge signal.

At this point, the cache (for example, the global cache memory 230) of the originating node (the node containing the requesting processor 120, 130, 140 or 150) has now become incoherent with other caches (for example, other global memory caches 230 in other DRAMs 160 of other nodes B through P) in the system 100 that share a copy of that line, as the requesting processor has been allowed to modify the line , while other global memory caches 230 with shared copies on other nodes B through P have not yet seen any invalidate on their copies of that line of memory. This temporary incoherency is only a problem, however, if the effect of this incoherency can be observed by a program executing on the system 100. These effects may be seen, for example, by a program consisting of two or more execution streams executing (simultaneously) on different processors 120, 130, 140 or 150 in different nodes A through P of the system 100, if any operations executed by the instruction stream running on a first processor, after it has modified the memory line, can be observed by an instruction stream running on any other processor, before it has observed the effect of the original invalidate (write). More generally, for consistent operation, the first processor must not be allowed to communicate the fact that it has modified the memory line to any other processor or processors 120, 130, 140 or 150 on any other node B through P, until such other processor or processors have seen the original invalidation. This embodiment of the present invention enjoys the performance gains of faster invalidate cycles, while maintaining correct and consistent operation by preventing communications between the processors until the effect of the invalidate has been observed by all other processors sharing a copy of the recently modified line of memory.

Communication between the processors 120, 130, 140 and/or 150 on the nodes A through P may take many forms, and may be dependent on the memory model of the processor employed. For example the Intel® X86 line of processors follow a processor write-ordered model. Such a model entails that there is no guarantee of any implied ordering of events between multiple processors, but that there is a guarantee of system wide observed ordering between writes generated by a single processor. This processor write ordering can be used to implicitly communicate between processors, and such communication must be prevented until the invalidate (which represents a processor write) has been seen by other processors. Another means of communication, which must also be prevented until the result of the invalidate is seen, is communication through interrupt mechanisms.

After receiving the phase I acknowledgment of the invalidate, the memory controller 170 in the node containing the requesting processor 120, 130, 140 or 150 has released the processor to modify the line and to continue operation. Now that an incoherency is present between the modified line of memory and other unmodified copies thereof in other nodes B through P, all inter-node communications involving this line of memory must cease until the invalidate has been seen by all other sharing nodes B through P. In the present embodiment, this task is placed upon the memory controller 170 of the node containing the processor that requested to modify the line, although other means of achieving this result are possible. The memory controller 170 then, resolves the explicit interrupt-based communication problem by delaying the sending of interrupts until the phase II acknowledgment of the invalidate is received, and resolves the implicit memory ordering-based communication by delaying the response to a request that requires returning a line which may have been modified by the requesting processor 120, 130, 140 or 150 after the phase I acknowledgment of the invalidate, until the phase II acknowledgment of the invalidate is received. The memory controller 170 of the node containing the requesting processor 120, 130, 140 or 150 may, however, process these requests and have the results ready to be output, but may hold the results pending the arrival of the phase II acknowledgment of the invalidate. The memory controller 170 of the home node containing the memory line issues an invalidate directing every node B through P storing an unmodified copy of the recently modified line of memory to invalidate the unmodified and now stale copy thereof. Once this is carried out, the home memory node sends the phase II acknowledgment of the invalidate back to the memory controller 170.. Responses to interrupt-based communications and the memory ordering-based communications may then be safely sent by the memory controller 170.

According to a still further embodiment of the present invention, once the phase II acknowledgment to the invalidate has been received, the memory controller 170 of the node A through P containing the processor 120, 130, 140 or 150 that recently modified the line of memory may consult the usage information stored, for example, in the modified line of memory and may write the recently modified line of memory back to the home node, which may then push a copy to the previously sharing nodes. as disclosed relative to Figs. 1-5. However, it is to be understood that the push-based and two-phase invalidate methods of reducing memory access latencies described herein need not be implemented together. Indeed, memory access latencies may be reduced in a multi-processor and/or multi-computer system 100 by filling the cache memories of the system 100 via a demand-driven method supplemented by a push-based model according to the present invention, or by implementing the two-phase invalidate method described above. Alternatively, the two methods, or variations thereof may be implemented in concert to achieve significant reductions in memory access times.

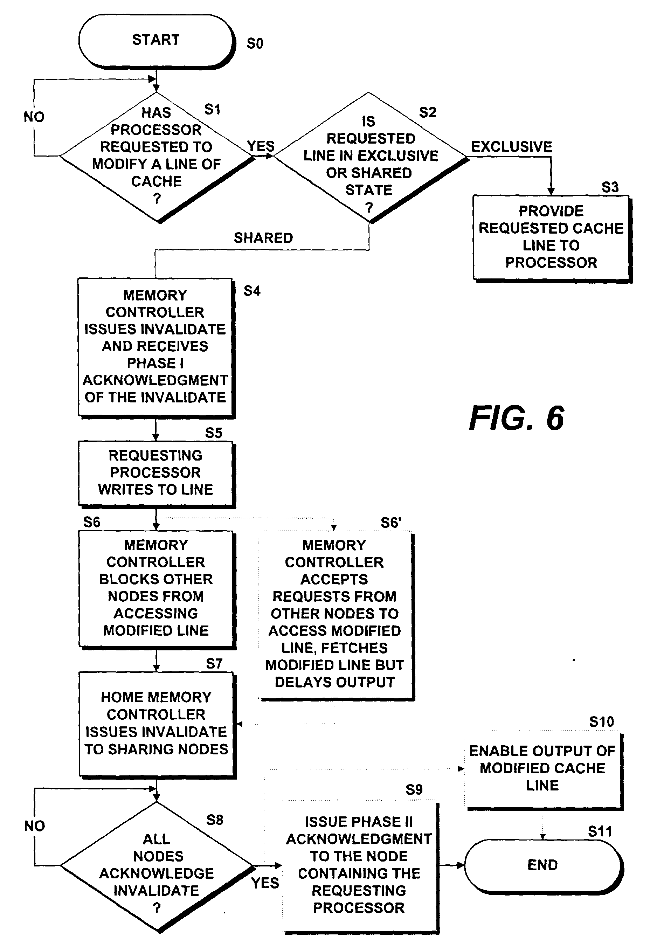

An embodiment of the two-phase invalidate method according to the present invention is shown in Fig. 6. The method starts at step S0. At step S1, it is determined whether a processor 120, 130, 140 or 150 (of node A, for example) has requested to modify a line of cache, such as, for example, a line stored within the global memory cache 230 (shown in Fig. 2). If not, the method reverts back to step S0. If the processor has requested to modify a line of memory, it is determined, in step S2, whether the line in question is in the exclusive state. If so, it is the only copy of such line and the line may be freely modified by the processor without generating an incoherency, as set forth in step S3. If it is in the shared state, the memory controller 170 issues an invalidate to the fabric/high speed switch 110, receives a phase I acknowledge to the invalidate in step S4 and allows the requesting processor 120, 130, 140 or 150 to modify (write to) the line of memory in question, as shown in step S5. In step S6, the memory controller 170 of node A blocks other nodes B through P from accessing the modified line. Alternatively, or in addition, step S6 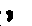 may be carried out, in which the memory controller 170 of node A accepts requests from other nodes B through P of the system 100 to access the modified line, fetches the modified line, but delays outputting the line to the fabric 110 until the phase II acknowledgment of the invalidate is received from the home node, the home node being that node containing the global memory 220 storing the now stale version of the line that was just modified by the requesting processor.

In step S7, the home memory controller 170 (the memory controller 170 of the node containing the line in its global memory 220) issues an invalidate, directing all nodes B through P which have a shared copy to discard (e.g., invalidate) the line stored within their respective global memory caches. In step S8, it is determined whether all nodes B through P that stored a copy of the recently modified line of memory have acknowledged the invalidate, at which time (step S9) the home node issues a phase II acknowledgment of the invalidate to the node containing the requesting processor. In step S10, the memory controller of the node containing the requesting processor may now enable the responses that were delayed in step S6'. The method ends at step S11.

According to a still further embodiment of the present invention, the operation of the respective memory controllers 170 of nodes A through P may bias the multi-processor and/or multi computer system 100 such that the majority of the coherency traffic (shared memory communication) is carried out via invalidate and push-based transactions, and such that copyback transactions (requests for a node to return a modified line) are minimized.

According to the present invention, the total shared memory space of the system 100 may be distributed among all or some of the nodes A through P, each memory controller 170 potentially being responsible for a section thereof. For each line of memory for which the memory controller 170 is responsible, the memory controller 170 keeps track of which nodes A through P have (or may have) a shared copy, and which node A through P (if any, and there can be only one) has a modified copy thereof. When a node requests an invalidate on a line of memory stored in the shared state in its global memory cache 230 (which stores copies of lines of memory from the global memory segments 220 other nodes B through P), the memory controller 170 of the node that stores the line in its global memory segment 220 (the home memory controller 170) advises the requesting node to update its global memory 220 (the global memory 220 controlled by the home memory controller 170) after a predetermined number of clocks cycles, according to another embodiment of the present invention. When the requesting node pushes the modified copy of the line of memory to the global memory segment 220 controlled by the home memory controller 170, the global memory 220 is updated with the recently modified line of memory. Moreover, the requesting node may also push a copy of the modified line of memory to all other nodes A through P that previously stored a shared copy of that line. Alternatively, the home memory controller 170 may, once it has been updated by the requesting node, take over the task of distributing the modified line of memory to all other nodes A through P in the system 100 previously storing a copy thereof.

When a node receives its copy of the recently modified line of memory from the requesting node, it will enter it in its global memory cache 230 if doing so does not displace another valid entry. If the node completes the update, that line, which was in the invalid state (after the phase II acknowledgment of the invalidate, for example) is now placed into the shared state by resetting, for example, bit D16 of the structure shown in Fig. 4. This mechanism biases the system 100 toward keeping lines cached locally in the global memory cache 230 in the shared state. In addition, if the space previously occupied by the unmodified copy of the line in the global memory cache 230 of a node A through P has been replaced by another entry, the memory controller 170 of that node may, according to the present invention, return a negative acknowledgment to the home memory controller 170, causing the home memory controller 170 to remove that node from the sharing list for that line by updating the usage information in the manner described relative to Fig. 4, for example.

The requesting memory controller 170 may, according to the present invention, automatically adjust the time it waits before sending back the modified line of memory to the home memory controller 170. For example, if the requesting memory controller 170 sends back the modified line of memory to the home memory controller 170 after X clock cycles (or some other time base), and sees that the requesting memory controller 170 has made yet another modification to the same line of memory that was just modified, the requesting memory controller will increase the value of X. If, however, the requesting memory controller 170 (the memory controller 170 that issued the initial invalidate for the line of memory in its global memory cache 230) receives a copyback request for that line from another node A through P within the system 100, it then knows that it has waited too long to send the modified copy of the line, and the requesting memory controller 170 will, therefore, adaptively decrease the value of X to thereby increase the probability that the modified line of memory will be provided to the appropriate nodes A through P before the modified line is requested by the processors 120, 130, 140 or 150 of the nodes A through P. When the modified line is written back to the global memory segment 220 controlled by the home memory controller 170, the value of X may form an integral part of the line of memory, and may be stored with the line such that the value thereof is preserved even when it is not cached in any global memory cache 230 on any node A through P. This may be done, for example, by extending the data structure shown in Fig. 4 to include the value of X the copyback delay. If the value of X is zero, the requesting memory controller 170, according to an embodiment of the present invention, will not schedule the line for an update and will not push the modified version thereof to any other node A through P listed in the data structure of Fig. 4. Indeed, in the case wherein the copyback delay is zero, the update of the line of memory will occur when the line is normally displaced from the global memory cache 230, for example, by a replacement line of memory or by a copyback requested by another node. Alternatively, according to a still further embodiment of the present invention, the copyback delay is not adjusted or controlled by the requesting memory controller 170, but is adjusted by some external program.

In a still further embodiment of the present invention, the system 100 utilizes the two phase invalidate mechanism described above to create low latency and hence high performance invalidates transactions. The system 100 then actively pushes the modified lines out to the nodes A through P previously storing a copy thereof. This combination causes the majority of coherency traffic over the system 100 to appear as invalidates, which are then processed in the high performance low latency two-phase manner described herein.

According to still further embodiments of the present invention, the recently modified line of memory pushed into the global memory cache 230 of the DRAM 160 may be successively propagated (i.e., pushed) into the lower level L2 and L1 caches, if present, coupled to each of the processors 120, 130, 140 or 150, if such pushes do not displace other valid entries. Memory access latencies, in this manner, can be further reduced by pushing recently modified line of memory into caches more intimately coupled to the processors.

While the foregoing detailed description has described preferred embodiments of the present invention, it is to be understood that the above description is illustrative only and not limiting of the disclosed invention. For example, other types of usage information may be devised implemented within the context of the present invention. Still other modifications may occur to those of skill in this art. The present invention, therefore, is to be limited only by the claims as set forth below.

## Claims

**1.** A method of reducing memory access latencies in a multi-processor system, each processor having at least one cache associated therewith, comprising the steps of:
maintaining usage information on a plurality of lines of memory in the system, the usage information at least indicating which caches stores a copy of which of the plurality of lines of memory;
pushing a selected line of memory into at least one selected cache based upon the usage information.

**2.** The method of claim 1, wherein each of the plurality of lines of memory stores its own usage information.

**3.** The method of claim 1, wherein the maintaining step includes the step of storing the usage information in a portion of each line of memory assigned to an error correction code.

**4.** The method of claim 1, wherein the selected line of memory includes a recently modified line of memory.

**5.** The method of claim 1, wherein the plurality of lines of memory includes every line of memory in the system.

**6.** The method of claim 1, wherein the plurality of lines of memory includes lines in a shared state.

**7.** The method of claim 1, wherein the selected line of memory is pushed into said at least one selected cache prior to a request therefor by a processor associated with the selected cache.

**8.** The method of claim 1, further comprising the steps of:
allowing a temporary incoherency between a recently modified line of memory stored in a segment of shared memory and an unmodified copy thereof stored in said at least one cache, the temporary incoherency lasting at least until said at least one cache invalidates the unmodified copy of the line of memory, and
disallowing access to modified line of memory until said at least one cache acknowledges invalidating the unmodified copy of the line of memory.

**9.** The method of claim 8, wherein the selected line of memory includes the modified line of memory and the pushing step pushes the modified line of memory into said at least one cache, said at least one cache being identified by the usage information.

**10.** The method of claim 8, further comprising the steps of:
generating an invalidate each time a processor requests to modify a line of memory in a shared state;
allowing the requesting processor to modify the line on receipt of a phase I acknowledgment to the invalidate, thereby allowing a temporary incoherency between the modified line and other unmodified copies thereof;
disallowing access by other processors within the multi-processor system at least to the line to be modified; and
allowing access to the modified line only after a phase II acknowledgment of the invalidate is received, indicating that each processor containing an unmodified copy has invalidated that copy thereof.

**11.** The method of claim 1, wherein the pushing step is carried out after an adaptive and configurable delay.

**12.** The method of claim 11, wherein the delay is reduced when a request for the selected line of memory is received from another processor prior to the pushing step, or increased when another request for the selected line of memory is received from a same processor or node.

**13.** A method of reducing memory access latencies in a multi-processor system, comprising the steps of:
generating an invalidate command by a processor within the system requesting to modify a line of memory
allowing the requesting processor to modify the line of memory without first informing other processors sharing the line, thereby creating a temporary incoherency between the modified copy of the line and other unmodified copies thereof in the system; and
disallowing accesses to the modified line until all other processors sharing the line acknowledge invalidating their unmodified copies thereof.

**14.** The method of claim 13, further comprising the steps of:
issuing a phase I acknowledgment to the invalidate command to the requesting processor when it is determined that no other processor in the system is currently modifying the line;
allowing the requesting processor to modify the line immediately on receipt of the phase I acknowledgment;
disallowing access by other processors to the modified line and to any other line thereafter modified;
generating a phase II acknowledgment to the invalidate command by each processor within the system sharing an unmodified copy of the line upon invalidating the shared unmodified copy of the line; and
allowing access to the modified line of memory by other processors after receipt of the phase II invalidate acknowledgment.

**15.** The method of claim 13, further comprising the steps of:
accepting requests from the other processors within the system for access at least to the modified line of memory immediately after the requesting processor modifies the line;
fetching the modified line of memory; and
enabling access to the fetched modified line only after all other processors sharing the line acknowledge invalidating their unmodified copies thereof.

**16.** The method of claim 13, wherein the multi-processor system includes a plurality of nodes, each node including a global memory representing a portion of a global memory space of the system and at least one cache memory configured to cache copies of lines of memory stored in the global memory of other processors, the method further comprising the steps of:
maintaining usage information on each line of memory stored in each global memory of the plurality of nodes, the usage information at least indicating which nodes cache a copy of which line of memory; and
pushing the modified line to each of the plurality of nodes storing unmodified copies of the line, based upon the usage information.

**17.** The method of claim 16, wherein each of the plurality of nodes includes a memory controller controlling at least the global memory and said at least one cache memory and wherein the pushing step is carried out by one memory controller pushing the modified line to at least one other memory controller.

**18.** The method of claim 16, wherein each cache memory includes a functionality of a memory controller and wherein the pushing step is carried out by a first cache memory pushing the modified line to at least one second cache memory.

**19.** A method of reducing memory access latencies in a multi-processor system wherein constituent processors communicate through a shared memory space, each processor being coupled to a cache memory controlled by a memory controller, comprising the step of:
filling at least one cache memory within the system with lines of memory based upon requests from at least one processor to which the cache memory is coupled and based upon pushes of recently modified lines of memory from at least one other cache memory within the system.

**20.** The method of claim 19, further comprising the step of pushing recently modified lines of memory from each cache memory to the memory controller coupled thereto.

**21.** The method of claim 19, wherein the cache memories are connected by a shared bus, thereby allowing each cache memory to push recently modified lines of memory directly into selected other cache memories within the system.

**22.** The method of claim 21, further comprising the step of maintaining usage information on each line of cached memory and wherein the selected other cache memories within the system are determined based upon the usage information.

**23.** The method of claim 22, wherein the usage information at least includes an identification of which cache memories within the system store a copy of which lines of memory.

**24.** The method of claim 19, wherein each line of memory stores its own usage information in a portion of the line of memory assigned to an error correction code.

**25.** The method of claim 19, wherein the recently modified lines of memory are pushed into each cache memory within the system storing an unmodified copy thereof.

**26.** A multi-node shared memory computer system, each node of the system being coupled to a fabric and each node comprising:
at least one processor,
memory, the memory including at least a global memory segment and a global memory cache, the global memory segment representing a fractional portion of a total shared memory space of the system, the global memory cache storing lines of memory copied from the global memory segment of other nodes in the system, and
a memory controller, the memory controller controlling the global memory segment and the global memory cache and being configured to push cached lines of memory recently modified by said at least one processor to a memory controller of another node within the system and to receive lines of memory pushed thereto.

**27.** The computer system of claim 26, wherein the memory controller is configured to interface with the fabric.

**28.** The computer system of claim 26, wherein the memory includes dynamic random access memory (DRAM).

**29.** The computer system of claim 26, wherein the memory controller is adapted to maintain usage information on each line of memory in the memory.

**30.** The computer system of claim 26, wherein the memory controller is adapted to participate in a two-phase acknowledgment strategy of invalidates by providing one or both phases of the two-phase acknowledgment to the memory controllers of other nodes in the system, the memory controller allowing the processor to modify a requested line of memory after receipt of a phase I acknowledgment of the invalidate and to actively push a modified line of memory to the other nodes in the system after a phase II acknowledgment of the invalidate.

**31.** The computer system of claim 26, wherein the memory controller is configured to push the recently modified lines of memory to other nodes within the system after an adaptive and configurable delay.

**32.** A memory controller for a node within a multi-node computer system, each node comprising at least one processor, shared memory and cache memory, comprising:
means for interfacing to a fabric coupling each node of the system;
means for controlling and for maintaining usage information on each line of memory in the shared memory and the cache memory;
means for pushing recently modified lines of memory to other memory controllers coupled to the fabric based upon the usage information; and
means for receiving copies of recently modified lines of memory from the other memory controllers through the fabric and for storing the received modified lines in one of the shared memory and the cache memory.

**33.** The memory controller of claim 32, further comprising means for generating a two-phase acknowledgment of an invalidate, the memory controller allowing the processor to modify a line of memory after a phase I acknowledgment of the invalidate and blocking all other accesses to the modified line until a phase II acknowledgment of the invalidate is received from each other memory controller in the system sharing a copy of the line.

**34.** The memory controller of claim 32, further comprising means for adaptively timing pushes of the recently modified lines of memory to increase a probability that the recently modified pushed lines of memory will be received by other nodes before they are requested thereby.

**35.** The memory controller of claim 32, wherein the usage information includes information as to which nodes in the system store copies of which lines of memory and wherein the memory controller further comprises means for maintaining the usage information in a portion of each line of memory assigned to an error correction code.

**35.** The memory controller of claim 32, wherein the usage information includes statistical memory line usage information
